Europäisches Patentamt

European Patent Office

Office européen des brevets

(19)

(11) Numéro de publication: **0 037 307**
**A1**

(12) # DEMANDE DE BREVET EUROPEEN

(21) Numéro de dépôt: 81400406.5

(22) Date de dépôt: 17.03.81

(51) Int. Cl.³: **H 02 K 17/36**
**H 02 P 7/74**

(30) Priorité: 24.03.80 FR 8006477

(43) Date de publication de la demande:
07.10.81 Bulletin 81/40

(84) Etats contractants désignés:
AT BE CH DE GB IT LI LU NL SE

(71) Demandeur: Sobiepanek, Janusz
14, Allée des Moulins
F-91190 Gif-sur-Yvette(FR)

(71) Demandeur: MOTEURS DROUARD, Société dite
Route d'Ennordres
F-18700 Aubigny-sur-Nere(FR)

(72) Inventeur: Sobiepanek, Janusz
14, Allée des Moulins
F-91190 Gif-sur-Yvette(FR)

(74) Mandataire: Polus, Camille et al,
c/o Cabinet Lavoix 2, Place d'Estienne d'Orves
F-75441 Paris Cedex 09(FR)

(54) Système de régulation de vitesse pour moteur asynchrone à double stator.

(57) L'invention concerne un système de variation de vitesse pour un moteur asynchrone ayant un double rotor R. La variation de la vitesse de ce moteur est obtenue par l'alimentation d'un des stators (2) par des groupes de contacteurs à semi-conducteurs (5,6), d'abord en phase par un premier groupe puis en opposition de phase par un autre groupe, la durée de conduction de chaque groupe de contacteurs étant déterminée par un circuit de commande (8, 9, 10).

EP 0 037 307 A1

Croydon Printing Company Ltd

1

Système de régulation de vitesse pour moteur asynchrone à double stator.
———————————————————

L'invention concerne un système de variation de vitesse d'un moteur asynchrone d'une construction spéciale.

On connaît déjà différents moyens pour faire varier la vitesse des moteurs asynchrones classiques.

La variation de vitesse des moteurs asynchrones classiques peut être obtenue de différentes façons. La plus efficace consiste dans la variation simultanée de la fréquence et de la tension statorique. Cependant, la commande électronique est très chère, ce qui limite la diffusion de cette méthode. On peut également faire varier la tension statorique. La méthode est très limitée à cause des mauvaises performances. La plage de régulation est très faible et le couple diminue rapidement. Pour les moteurs avec des rotors bobinés, il existe aussi une méthode permettant de faire varier la vitesse au moyen de la régulation du courant rotorique. La portée de la méthode est également limitée.

Une autre solution plus satisfaisante à ce problème peut être obtenue, par exemple selon le FR 2 200 660 dans un système de régulation pour moteur asynchrone mono ou polyphasé comportant deux stators indépendants dont l'un au moins, dit stator d'alimentation, est relié au réseau alternatif et alimenté en tension constante, et un rotor formé de deux demi-rotors qui sont électriquement et mécaniquement couplés l'un à l'autre et qui sont respectivement couplés magnétiquement à l'un des stator, l'autre stator dit de régulation étant relié à un circuit comportant au moins un organe de régulation de courant, tandis que les deux demi-rotors portent un unique enroulement électrique, de préférence à cage.

Dans le système de ce brevet, la variation de vitesse est obtenue grâce à des impédances de diverses natures, telles que des inductances variables, des résistances de régulation et des transformateurs. Ces éléments sont coûteux et encombrants.

L'invention a donc pour but de fournir un système de régulation du type défini ci-dessus pour un moteur asynchrone à doubles stator et rotor dans lequel les inconvénients précités sont évités.

Ce résultat est atteint selon l'invention en ce que ledit circuit comporte un premier groupe de commutateurs commandés à semi-conducteurs destinés à alimenter chaque phase dudit stator de régulation dans un premier sens ainsi qu'un second groupe de commutateurs commandés à semi-conducteurs destinés à alimenter, en alternance avec le premier groupe, chaque phase du stator de régulation dans le sens opposé, un circuit de commande pour provoquer le déclenchement sélectif pendant des durées prédéterminées de chacun des commutateurs de chaque groupe, et en ce que les bobines des phases dudit stator de régulation sont raccordées entre elles de telle manière que le flux magnétique résultant soit en phase avec le flux du stator d'alimentation quand le premier groupe de commutateurs conduit et en opposition de phase quand l'autre groupe de commutateurs conduit.

Grâce à ces caractéristiques, le moteur reçoit donc sur son stator de régulation une tension variable engendrée par la commande séquentielle des commutateurs à semi-conducteurs.

D'autres caractéristiques de l'invention apparaîtront au cours de la description qui va suivre.

Aux dessins annexés, donnés uniquement à titre d'exemple et sur lesquels;

les Fig. 1 et 2 sont deux schémas différents d'un système de régulation pour moteur asynchrone à double rotor, suivant l'invention;

3

la Fig. 3 montre des courbes de différents cycles de fonctionnement du système représenté sur la Fig. 2;

les Fig.4 et 5 sont des schémas simplifiés montrant d'autres caractéristiques du système de régulation, suivant l'invention.

Sur le plan constructif, le moteur utilisé avec le système de régulation suivant l'invention comprend deux stators dits respectivement d'alimentation et de régulation. Le rotor est composé de deux demi-rotors. Les longueurs d'empilage du circuit magnétique des demi-rotors correspondent aux longueurs d'empilage des stators, respectivement.

Des conducteurs traversent les deux demi-rotors et sont court-circuités par deux couronnes placées à chaque extrémité du rotor. Les têtes de bobine doivent avoir les dimensions les plus faibles possibles, notamment entre les deux stators. Le moteur peut être mono ou polyphasé. Les stators sont positionnés de préférence de façon que les vecteurs du flux de chaque stator soient en phase. Généralement, on l'obtiendra par l'alignement des bobinages correspondants de chaque stator et un raccordement convenable. Les deux stators ont le même nombre de pôles. La technologie de construction est classique.

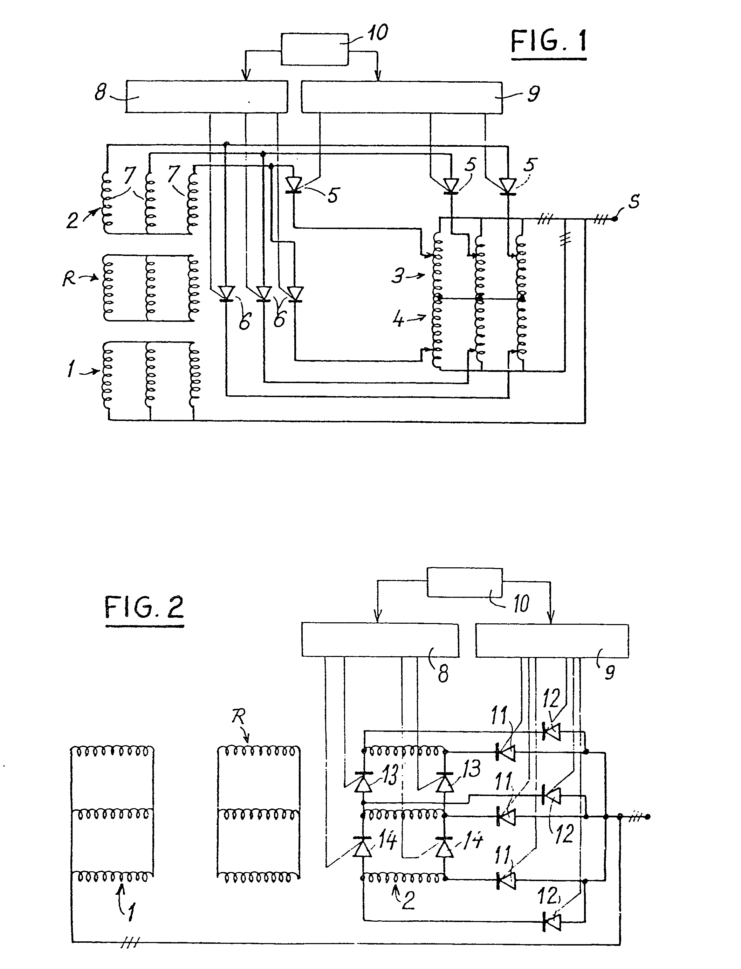

La Fig. 1 montre schématiquement un premier mode de réalisation du système de régulation suivant l'invention. Le stator 1 est alimenté en tension constante à partir du secteur S. Le stator 2 est alimenté en tension variable par un autotransformateur 3, 4. La partie 3 de l'autotransformateur alimente le stator 2 en tension en phase, c'est-à-dire le vecteur du flux est en phase avec le vecteur du flux du stator 1. La partie 4 de l'autotransformateur alimente le stator 2 en opposition de phase. L'appareil 3, 4 au lieu d'un autotransformateur peut être un transformateur variable en continu ou par paliers. Chaque enroulement de l'autotransformateur 3, 4 est

4

connecté par une prise de curseur réglable à un commutateur à semi-conducteurs répartis en deux groupes 5 et 6
connectés à leur tour aux extrémités libres des bobinages
7 du stator de régulation 2. Les extrémités opposées de
ces bobinages sont ici reliées ensemble. Les commutateurs
à semi-conducteurs 5 et 6 permettent le changement très
rapide du sens d'alimentation des phases du bobinage du
stator de régulation et, le cas échéant, le changement
rapide des prises, de telle manière que le flux magnétique
résultant soit en phase avec le flux du stator d'alimentation
1 quand le premier groupe de commutateurs conduit et en opposition de phase quand l'autre groupe de commutateurs conduit.

Les groupes de commutateurs 5 et 6 sont commandés
par leur électrode de commande, qui sont reliés à deux
circuits 8 et 9 de répartition du déclenchement auxquels
est relié un circuit de rythme 10 qui détermine la succession des instants de déclencement selon un programme
prédéterminé ou asservi. Les commutateurs peuvent être
des thyristors, des transistors ou des triacs.

La Fig. 2 montre schématiquement un autre mode de
réalisation du système de régulation. Le stator 1 est
alimenté par une tension constante. Le stator 2 est alimenté par des contacteurs à semi-conducteurs qui peuvent
également être des transistors, des thyristors ou des triacs.

Ces éléments sont divisés en deux groupes dont le
premier comprend les éléments 11 et 12 et le deuxième
les éléments 13 et 14.

Quand le groupe 11, 12 conduit le courant, l'autre
groupe 13, 14 se comporte comme un interrupteur ouvert.
Les électrodes de commande sont reliées de la même façon
que sur la Fig. 1, de manière à assurer alternativement
la conduction de l'un ou de l'autre groupe selon la fréquence et la durée de conduction programmée. En particulier, la durée de conduction d'un groupe peut être zéro,
tandis que celle de l'autre est de 100%.

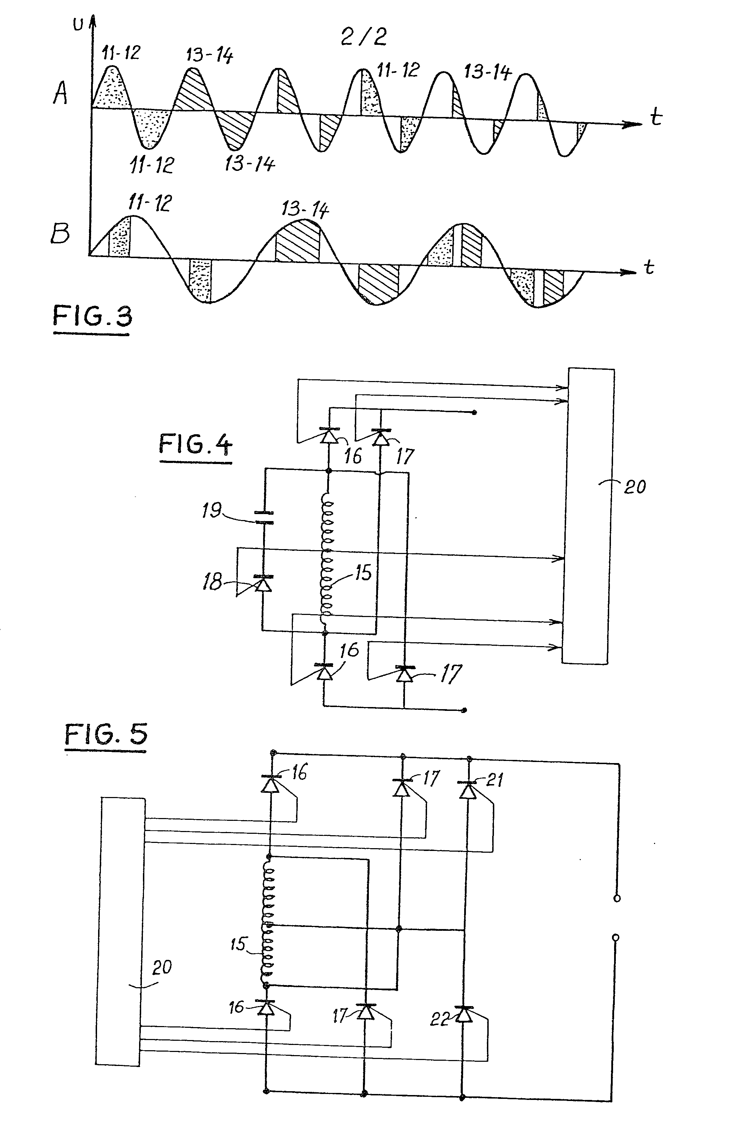

Les exemples de différents cycles de fonctionnement sont représentés sur la Fig. 3. La courbe A montre schématiquement les possibilités de fonctionnement avec des thyristors. On admettra qu'un groupe 11, 12 par exemple, alimente le moteur en phase, tandis que l'autre groupe 13, 14 l'alimente en opposition de phase. Les périodes de conduction du groupe 11, 12 sont indiquées par des points, les périodes de conduction du groupe 13, 14 sont hachurées. La commande peut être réalisée par périodes entières, ou par la variation de l'angle de conduction, ou d'une manière mixte. La courbe B de la Fig. 3 montre les possibilités supplémentaires qu'offrent les transistors de puissance permettant aussi bien l'ouverture que la fermeture du commutateur au cours de l'alternance considérée du secteur. La commande doit déterminer les durées de conduction de façon à éliminer la composante continue du courant. Comme décrit par la suite, on peut brancher aux bornes du stator 2 des condensateurs travaillant en périodes de conduction en opposition de phase. Ils diminuent le déphasage du courant et améliorent les performances du moteur.

La Fig. 4 montre le cas le plus générale de la régulation.

Le bobinage 15 représente une phase du stator de régulation d'un moteur à double stator. Le nombre de phases peut être quelconque. Le stator d'alimentation à tension constante n'est pas représenté ici. Il possède le même nombre de phases que le stator de régulation. Le schéma comprend trois groupes 16, 17 et 18 de commutateurs à semi-condoncteurs, tels que des transistors ou des thyristors. Si l'un des groupes conduit le courant, les autres groupes se comportent comme des interrupteurs ouverts. On admettra que le groupe 16 conduit le courant et que le vecteur du flux du stator de régulation est en phase avec le vecteur du flux du stator d'alimentation.

6

La force électromotrice engendrée par le stator de régulation contribue à apporter l'énergie au rotor et contribue à engendrer le couple rotorique. Si le groupe 16 cesse de conduire et le groupe 17 devient conducteur, le vecteur du flux du stator de régulation sera déphasé de 180° par rapport au stator d'alimentation. La force électromotrice engendrée sera également déphasée de 180° par rapport à celle induite par le stator d'alimentation. Sa valeur moyenne sera régulée par la durée de conduction du groupe. La force électromotrice étant en opposition de phase, la partie de la machine comprenant le stator de régulation se comporte comme une génératrice asynchrone restituant de la puissance active au réseau. Cette force électromotrice principale induite par le stator d'alimentation, se comporte comme une résistance rotorique variable. Enfin, un autre groupe de commutateurs 18 permet de court-circuiter le stator de régulation (fonctionnement en mode passif), éventuellement sur une impédance. Sur la Fig. 4, cette impédance est représentée par un groupe 19 de condensateurs. Le groupe 18, 19 est une possibilité supplémentaire pouvant être choisie pour modifier les caractéristiques de fonctionnement. Les caractéristiques désirées sont obtenues par la régulation des durées de fonctionnement de chaque groupe 16, 17, 18 des commutateurs. La commande des éléments 16, 17, 18 peut être assurée par un circuit de commande 20 analogue aux circuits 8; 9 et 10 des précédentes Figures.

La commande peut être réalisée pour produire toutes séquences désirées selon des règles et des techniques connues.

Les remarques concernant la Fig. 3 avec différentes possibilités de fonctionnement des commutateurs s'appliquent au schéma de la Fig. 4.

Bien entendu, dans le cas des moteurs polyphasés, chaque phase du stator de régulation sera soumise au même procédé: une alimentation en phase alternée avec une alimentation en opposition de phase et, éventuellement,avec un court-circuit des bobinages sur eux-mêmes avec ou sans impédance extérieure.

Cependant, l'essentiel du système consiste dans la détermination du sens et, le cas échéant, de l'amplitude du flux résultant d'un stator par rapport à l'autre.

Cela peut être obtenu de différentes façons. En particulier, l'effet désiré peut être obtenu par l'intervention sur une partie du stator d'alimentation ou encore sur une partie du stator de régulation comme cela est représenté sur la Fig. 5.

Ainsi, l'amplitude du flux peut être modifiée par l'alimentation au moyen d'une ou de plusieurs prises sur les bobinages comportant un nombre de spires variable. Cette méthode peut remplacer le fonctionnement avec transformateur comme cela a été expliqué à propos de la Fig. 1.

Plus précisément, la Fig. 5 représente à titre d'exemple et en monophasé le bobinage 15 du stator de régulation avec une prise intermédiaire. Cette prise peut être branchée sélectivement sur la tension du secteur S par des commutateurs à semi-conducteurs 21 et 22. Le schéma de fonctionnement peut alors être le suivant:

    1) Bobinage total   : commutateurs $\begin{matrix}16-16\\17-17\end{matrix}$

    2) Moitié de bobinage: commutateurs $\begin{matrix}16-21\\17-22\end{matrix}$

Le moteur asynchrone avec son système de variation de vitesse peut être appliqué pour des dispositifs d'entraînement industriels à vitesse variable par exemple.

8
- REVENDICATIONS-

1.- Système de régulation pour moteur asynchrone mono ou polyphasé comportant deux stators indépendants (1, 2) dont l'au au moins, dit stator d'alimentation, est relié au réseau alternatif et alimenté en tension constante, et un rotor (R) formé de deux demi-rotors qui sont électriquement et mécaniquement couplés l'un à l'autre et qui sont respectivement couplés magnétiquement à l'un des stators, l'autre stator dit de régulation étant relié à un circuit comportant au moins un organe de régulation de courant, tandis que les deux demi-rotors portent un unique enroulement électrique, de préférence à cage, caractérisé en ce que ledit circuit comporte un premier groupe (5; 11,12; 16) de commutateurs commandés à semi-conducteurs destinés à alimenter chaque phase dudit stator de régulation (2) dans un premier sens ainsi qu'un second groupe (6; 13,14;17) de commutateurs commandés à semi-conducteurs destinés à alimenter, en alternance avec le premier groupe, chaque phase du stator de régulation (2) dans le sens opposé, un circuit de commande (8,9,10; 20) pour provoquer le déclenchement sélectif pendant des durées prédéterminées de chacun des commutateurs de chaque groupe, et en ce que les bobines des phases dudit stator de régulation sont raccordées entre elles de telle manière que le flux magnétique résultant soit en phase avec le flux du stator d'alimentation (1) quand le premier groupe de commutateurs conduit et en opposition de phase quand l'autre groupe de commutateurs conduit.

2.- Système de régulation selon la revendication 1, caractérisé en ce que chaque phase du stator de régulation (2) est en outre alimenté par un troisième groupe (18) de contacteurs à semi-conducteurs destinés à court-circuiter le stator de régulation sur une impédance (_19) nulle le cas échéant.

9

3.- Système de régulation selon la revendication 1, caractérisé en ce que le stator de régulation (2) est alimenté à partir d'un transformateur (3,4)destiné à produire une variation de la tension de manière continue ou par paliers, permettant de changer le sens d'alimentation soit en phase, soit en opposition de phase et en ce que le branchement du stator de régulation (2) sur des prises de ce transformateur est réalisé respectivement par l'intermédiaire des groupes (5, 6) de contacteurs à semi-conducteurs.

4.- Système de régulation selon l'une quelconque des revendications 1 à 3, caractérisé en ce que les changements périodiques de sens et d'amplitude du flux résultant d'un stator par rapport à l'autre (1, 2) sont obtenus par des branchements,à l'aide des contacteurs à semi-conducteurs (16,17,21,22),effectués sur une partie du stator de régulation et/ou une partie du stator d'alimentation et en ce que la variation de l'amplitude du flux résultant est obtenue par un branchement sur dfférentes prises des bobinages comportant un nombre de spires variable .

FIG. 1

FIG. 2

0037307

1/2

2 / 2

FIG.3

FIG.4

FIG. 5

# RAPPORT DE RECHERCHE EUROPEENNE

Office européen
des brevets

Numéro de la demande

EP 81 40 0406

| Catégorie | DOCUMENTS CONSIDERES COMME PERTINENTS | | Revendica-tion concernée |
|---|---|---|---|
| | Citation du document avec indication, en cas de besoin, des parties pertinentes | | |
| A | AT - B - 338 384 (K. HERWIG) <br><br> * page 4, lignes 5 à 16; figure 1 * | | 1 |
| A | NL - A - 67 09 715 (L.F.A. KNOTTNERUS) <br> * page 5, lignes 14 à 30; figure 1 * | | 1 |
| A | DE - C - 871 481 (SIEMENS - SCHUCKERTWERKE AG) <br><br> * page 2, lignes 29 à 47; figure 2 * | | 1 |
| A | FR - A - 2 200 660 (S. OCCHETTO) <br><br> * page 2, lignes 4 à 14; page 11, ligne 40 à page 12, ligne 3; figure 13 * | | 3 |
| A | FR - A - 1 142 902 (SIEMENS - SCHUCKERTWERKE AG) <br><br> * page 1, colonne de gauche, lignes 1 à 39 * | | 1 |

**CLASSEMENT DE LA DEMANDE (Int. Cl.³)**

H 02 K 17/36
H 02 P 7/74

**DOMAINES TECHNIQUES RECHERCHES (Int. Cl.³)**

H 02 K 17/36
H 02 K 17/34
H 02 P 7/62
H 02 P 7/74
H 02 P 7/40

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-07-1981 | WEIHS |